# DEMANDE DE BREVET EUROPEEN

(11) **EP 4 711 829 A1**
(43) Date de publication de la demande: **18.03.2026**
(21) Numéro de dépôt: 25200801.6
(22) Date de dépôt: 08.09.2025
(51) Int. Cl.: G02B 6/136

(54) **PROCÉDÉ DE FABRICATION DE DISPOSITIF PHOTONIQUE AVEC PERTES RÉDUITES**

(30) Priorité: 13.09.2024 FR 2409785
(71) Demandeur: Commissariat à l'Energie Atomique et aux Energies Alternatives, 75015 Paris (FR)
(72) Inventeur: CHAUSSE, Pierre, 38054 GRENOBLE Cedex 09 (FR); WILMART, Quentin, 38054 GRENOBLE Cedex 09 (FR); OLIVIER, Ségolène, 38054 GRENOBLE Cedex 09 (FR)
(74) Mandataire: Atout PI Laplace

(57) **Abrégé**

L'invention a pour objet un procédé de fabrication d'un dispositif photonique (D1) comprenant les étapes suivantes :
(i) fournir une structure de guidage optique (WG) disposée sur une première couche en SiO2 thermique ; la première couche (C1) étant disposée sur une première face d'un substrat (SUB) en un matériau semi-conducteur ;
(ii) graver la seconde face opposée à la première face du substrat en dessous d'au moins une partie de structure de guidage optique jusqu'à la première couche (C1) en SiO2 thermique de manière à obtenir une membrane (M1) formée par une partie de la première couche suspendue au-dessus d'une cavité (CV) délimitée par deux piliers (PL1, PL2) ; la structure de guidage optique étant disposée sur ladite membrane ;
(iii) déposer une deuxième couche (C2) en SiO2 sur la première couche (C1) du côté de la cavité (CV) de manière à augmenter l'épaisseur de la membrane (M1).

## Description

### Champ d'application

L'invention concerne un dispositif photonique de guidage d'ondes monté sur une membrane suspendue sur un substrat semi-conducteur et son procédé de fabrication.

### Problème soulevé

Plusieurs techniques de fabrication ont été développées pour réaliser des microstructures et des nanostructures sur des substrats semi-conducteurs permettant de fabriquer des circuits et des systèmes intégrés. Ces systèmes couvrent une multitude d'usages tels que des circuits microélectroniques à base de transistors, des micro-systèmes de type MEMS (acronyme du terme anglais Micro-Electro-Mechanical Systems ) ou NEMS (acronyme du terme anglais Nano-Electro-Mechanical Systems), des capteurs intégrés (capteurs de pression, accéléromètres, capteurs chimiques ...), ou des systèmes photoniques et optoélectroniques intégrés sur un substrat semi-conducteur.

Plus spécifiquement, il est possible de réaliser des circuits photoniques, avec des émetteurs lasers associés à des couches de traitement des faisceaux émis (guidage, multiplexage/démultiplexage, amplification ...), la/les couches de traitement étant déposées sur un substrat silicium (« Photonic on Silicon »). Les lasers émetteurs peuvent être intégrés dans la puce du circuit photonique ou extérieur à la puce du circuit photonique.

A titre d'exemple illustratif et non limitatif, la figure 1 illustre une vue en perspective d'un dispositif photonique selon l'état de l'art. Le coupleur D0 comprend une structure de guidage optique WG0 en un premier matériau diélectrique disposée sur une couche C0 en SiO₂ disposée sur un substrat massif en silicium. L'empilement des couches est réalisé selon une direction Z normale à un plan (X,Y). La structure de guidage optique WG0 s'étend selon une direction Y orthogonale à la direction d'empilement Z. La structure de guidage optique WG0 est destinée à confiner une onde électromagnétique propagée selon sa direction d'extension Y.

Plusieurs problèmes ont été clairement identifiés dans les circuits photoniques selon l'état de l'art. En effet, dans certaines parties du circuit comme les coupleurs en entrée ou les modulateurs RF, le faisceau lumineux propagé s'élargit et le confinement n'est pas idéal surtout dans les transitions d'une partie à une autre du circuit photonique. La lumière présente une tendance à aller vers le matériau à indice optique le plus haut. Dans les solutions de l'état de l'art, la couche en SiO₂ séparant la structure de guidage du substrat présente une épaisseur généralement inférieure à 1µm et au mieux comprise entre 2 et 3 µm. Ceci induit un chevauchement entre la lumière et le substrat en semi-conducteur situé en dessous de la structure de guidage. Ce chevauchement entraîne une fuite optique et donc des pertes. Ces pertes entraînent une baisse de la puissance de sortie obtenue pour les circuits photoniques classiques et, dans le cadre de la photonique quantique, une détérioration considérable du signal qui le rend inutile pour réaliser des opérations quantiques. Dans ce contexte, l'élimination du couplage de l'onde propagée avec le substrat en semi-conducteur devient cruciale.

Dans le contexte de l'invention, on entend par « SiO₂ thermique » une couche de dioxyde de silicium formée par oxydation thermique des plaquettes de silicium. Ce processus consiste à chauffer les tranches de silicium dans un environnement riche en oxygène, ce qui entraîne la formation d'une fine couche de SiO₂ à la surface. Le SiO₂ thermique est couramment utilisé dans la fabrication des composants semi-conducteurs pour ses excellentes propriétés d'isolation électrique.

Dans le contexte de l'invention, on entend par « SiO₂ non-thermique » ou « SiO₂ déposé » une couche de dioxyde de silicium formée par des techniques de dépôt telles que le dépôt chimique en phase vapeur assisté par plasma, la pulvérisation cathodique ou d'autres méthodes de dépôt. Cette terminologie est couramment utilisée pour distinguer les couches de SiO₂ formées par des processus de dépôt de celles formées par l'oxydation thermique du silicium.

D'un point de vue structurel, il est possible de distinguer une couche en SiO₂ thermique d'une couche en SiO₂ non-thermique via les paramètres suivants :
- densité du matériau : le SiO₂ thermique présente une densité supérieure à celle du SiO₂ déposé. Cela se traduit par le fait que les atomes de silicium et d'oxygène sont généralement plus étroitement liés et plus densément empilés en raison du processus d'oxydation du silicium cristallin qui se produit lors de la formation thermique.
- présence des liaisons hydrogènes libres : le SiO₂ thermique ne présente pas des liaisons hydrogène libres, ce qui n'est pas le cas dans le SiO₂ déposé.
- densité : Le SiO₂ thermique présente une densité supérieure à celle du SiO₂ non-thermique.

Des techniques d'analyse telles que la réflexion des rayons X, la spectroscopie Raman, la spectroscopie infrarouge à transformée de Fourier (FTIR), l'ellipsométrie et la microscopie électronique peuvent être utilisées pour caractériser la structure et la composition des films de SiO₂ et ainsi différencier une couche en SiO₂ thermique et une couche en SiO₂ déposé non-thermique.

### Art antérieur/ Restrictions de l'état de l'art

Parmi les solutions envisagées de l'état de l'art, on note l'augmentation de la distance séparant la structure de guidage optique du substrat semi-conducteur par augmentation de l'épaisseur de la couche en SiO₂ thermique. Cependant, Les méthodes de fabrication actuelles manquent de reproductibilité, produisent des structures fragiles ou sont coûteuses, rendant difficile leur industrialisation. En effet, l'augmentation de l'épaisseur de ladite couche à des épaisseurs suffisantes pour éliminer le couplage nécessite un temps d'oxydation thermique de l'ordre de quelques jours ce qui est très couteux en termes de temps et d'énergie.. Alternativement, dans le cas d'utilisation de plaques SOI (Acronyme de Silicon on Insulator), l'épaisseur de la couche en SiO2 est prédéterminée par le fournisseur.

De plus, obtenir une couche en SiO₂ thermique ayant une épaisseur supérieure à 5µm nécessite plusieurs cycles de recuits thermiques à des températures supérieures à 800°C. Ceci induit une augmentation des tensions mécaniques internes au sein des couches formant le circuit photonique qui le fragilisent.

Alternativement, le dépôt d'une couche supplémentaire de SiO₂ non thermique sur la couche en SiO₂ thermique dégrade l'interface vue par la structure de guidage optique à cause de la présence de liaisons hydrogène libres. Ces liaisons absorbent une partie de l'onde électromagnétique propagée pour des longueurs d'ondes visées et réduisent ainsi la performance du circuit photonique.

### Réponse au problème et apport solution

Pour pallier les limitations des solutions existantes en ce qui concerne la réalisation, l'invention propose un procédé de fabrication permettant d'obtenir une structure de guidage optique qui repose sur une membrane formée par un empilement comprenant au moins une couche en SiO₂ thermique et une couche en SiO₂ non-thermique. La membrane permet de séparer la structure de guidage du substrat semi-conducteur et ainsi éliminer les pertes optiques dues au chevauchement de l'onde propagée avec le semi-conducteur.

De plus, le procédé selon l'invention permet de réaliser une membrane ayant une épaisseur suffisante pour améliorer le confinement dans la structure de guidage sans avoir recours à une pluralité de recuits thermiques. Ceci permet d'éviter les inconvénients des recuits thermiques préalablement détaillés, à savoir le budget thermique et l'introduction de fragilité mécanique.

De plus, le procédé selon l'invention permet de garder une interface entre la structure de guidage et le SiO₂ thermique et ainsi ne pas dégrader la performance optique du circuit photonique par absorption.

Une structure de guidage avec une réduction des pertes optiques est alors obtenue grâce au procédé selon l'invention sans dégrader la robustesse mécanique du dispositif ni la puissance optique propagée.

### Résumé /Revendications

L'invention a pour objet un procédé de fabrication d'un Procédé de fabrication d'un dispositif photonique comprenant les étapes suivantes :
- fournir une structure de guidage optique disposée sur une première couche en SiO₂ thermique ; la première couche étant disposée sur une première face d'un substrat en un matériau semi-conducteur ;
- graver la seconde face opposée à la première face du substrat en dessous d'au moins une partie de structure de guidage optique jusqu'à la première couche en SiO₂ thermique de manière à obtenir une membrane formée par une partie de la première couche suspendue au-dessus d'une cavité délimitée par deux piliers ; la structure de guidage optique étant disposée sur ladite membrane ;
- déposer une deuxième couche en SiO₂ sur la première couche du côté de la cavité de manière à augmenter l'épaisseur de la membrane.

Selon un aspect particulier de l'invention, l'étape (iii) de dépôt de la deuxième couche est réalisée par dépôt chimique en phase vapeur assisté par plasma haute densité ou par dépôt en couches atomiques ou par dépôt par laser pulsé ou par dépôt chimique en phase vapeur à basse pression.

Selon un aspect particulier de l'invention, l'étape (i) comprend un sous-procédé de fabrication de la structure de guidage optique sur la première couche en SiO₂ thermique.

Selon un aspect particulier de l'invention, le sous-procédé de fabrication de la structure de guidage optique (WG) comprend les sous-étapes suivantes :
- fournir un substrat (SOI) comprenant un film en silicium positionné sur une couche en SiO₂ thermique enterrée et positionnée sur un support en silicium massif ;
- graver le substrat de manière à réaliser un ruban formant une structure de guidage optique à partir du film en silicium sur la couche en SiO₂ thermique enterrée.

Selon un aspect particulier de l'invention, le sous-procédé de fabrication de la structure de guidage optique comprend les sous-étapes suivantes :
- fournir le substrat massif en un matériau semi-conducteur.
- déposer la première couche en SiO₂ thermique sur le substrat par oxydation thermique ;
- déposer une couche intermédiaire en un matériau diélectrique sur la première couche ;
- graver la couche intermédiaire pour structurer la structure de guidage optique.

Selon un aspect particulier de l'invention, le procédé comprend en outre l'étape suivante : déposer une troisième couche en SiO₂ sur la deuxième couche du côté de la cavité ; l'étape (iv) étant réalisée par dépôt chimique en phase vapeur assisté par plasma ou par pulvérisation cathodique ou par dépôt par filage de liquide.

Selon un aspect particulier de l'invention, le procédé comprend en outre l'étape suivante : polir les deux piliers du côté de la cavité de manière à découvrir au moins une partie du substrat en un matériau semi-conducteur.

Selon un aspect particulier de l'invention, le procédé comprend en outre l'étape suivante : encapsuler au moins une partie de la structure de guidage dans une couche d'encapsulation en diélectrique.

Selon un aspect particulier de l'invention, le procédé comprend en outre l'étape suivante : Remplir la cavité par un liquide adhésif ayant un indice optique compris dans l'intervalle [nₒₚₜ -10%, nₒₚₜ+10%], nₒₚₜ étant l'indice de réfraction de la membrane.

L'invention concerne également un dispositif photonique comprenant une structure de guidage optique disposée sur une membrane suspendue entre deux piliers; ladite membrane étant formée par un empilement de couches comprenant une première couche en SiO₂ thermique et au moins une deuxième couche en SiO₂ non-thermique; la première couche étant confinée entre la structure de guidage optique et la deuxième couche.

Selon un aspect particulier de l'invention, la membrane présente une épaisseur supérieure à 3 µm.

Selon un aspect particulier de l'invention, la première couche présente une densité supérieure à celle de la deuxième couche.

### Description détaillée

D'autres caractéristiques et avantages de la présente invention apparaîtront mieux à la lecture de la description qui suit en relation aux dessins annexés suivants.

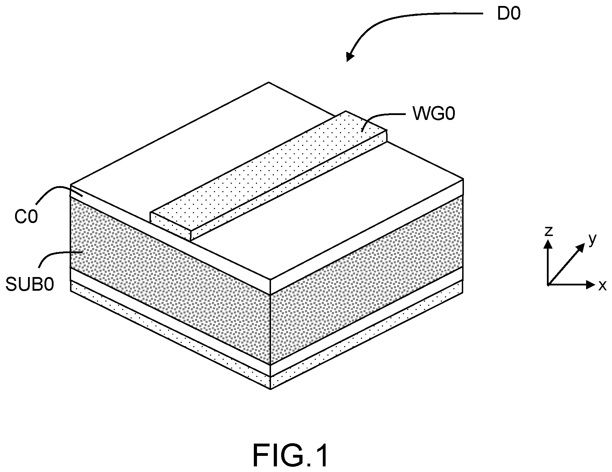

La figure 1 illustre une vue en perspective d'un dispositif photonique selon l'état de l'art. Cette figure a été déjà décrite.
La figure 2 illustre l'organigramme d'un procédé de fabrication selon l'invention.
La figure 3a illustre la structure obtenue à l'issue de la première étape du procédé de fabrication selon l'invention.
La figure 3b illustre la structure obtenue à l'issue de la deuxième étape du procédé de fabrication selon l'invention.
La figure 3c illustre la structure obtenue à l'issue de la troisième étape du procédé de fabrication selon l'invention.
La figure 3d illustre la structure obtenue à l'issue de la quatrième étape du procédé de fabrication selon l'invention.
La figure 3e illustre la structure obtenue à l'issue de la cinquième étape du procédé de fabrication selon l'invention.
La figure 4 illustre un dispositif photonique selon l'invention.

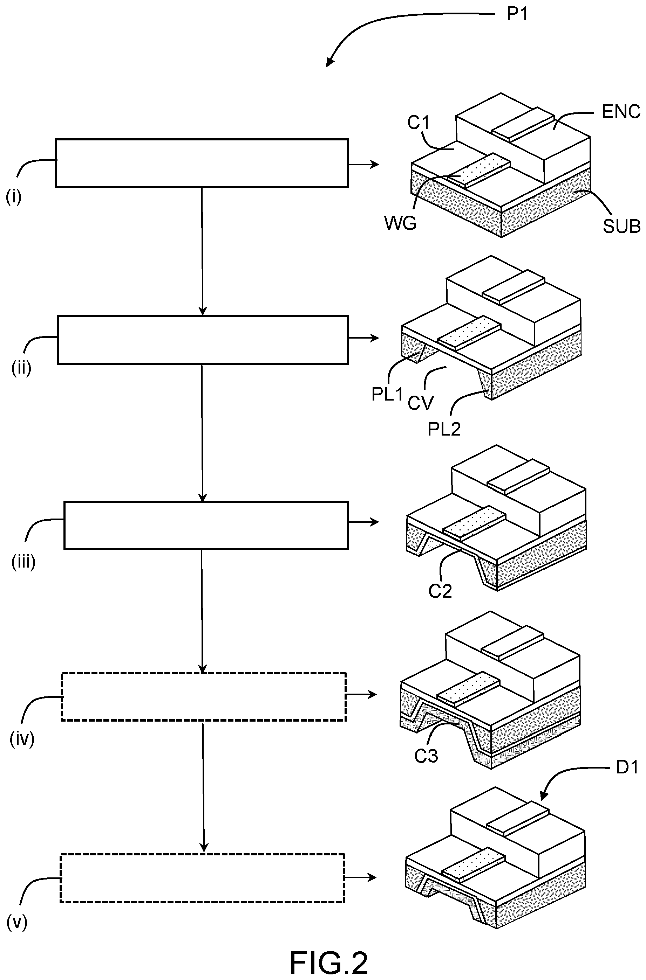

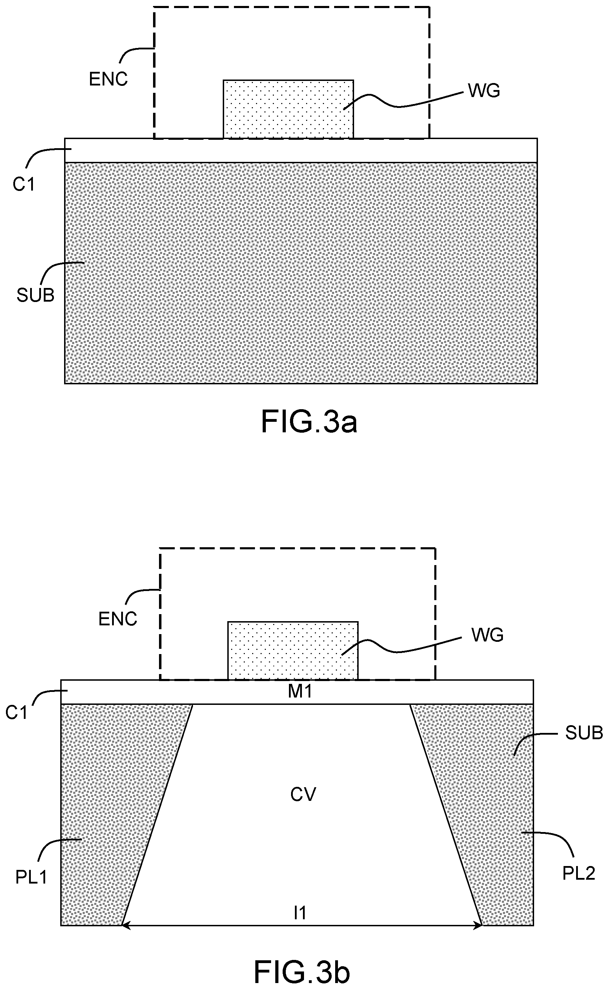

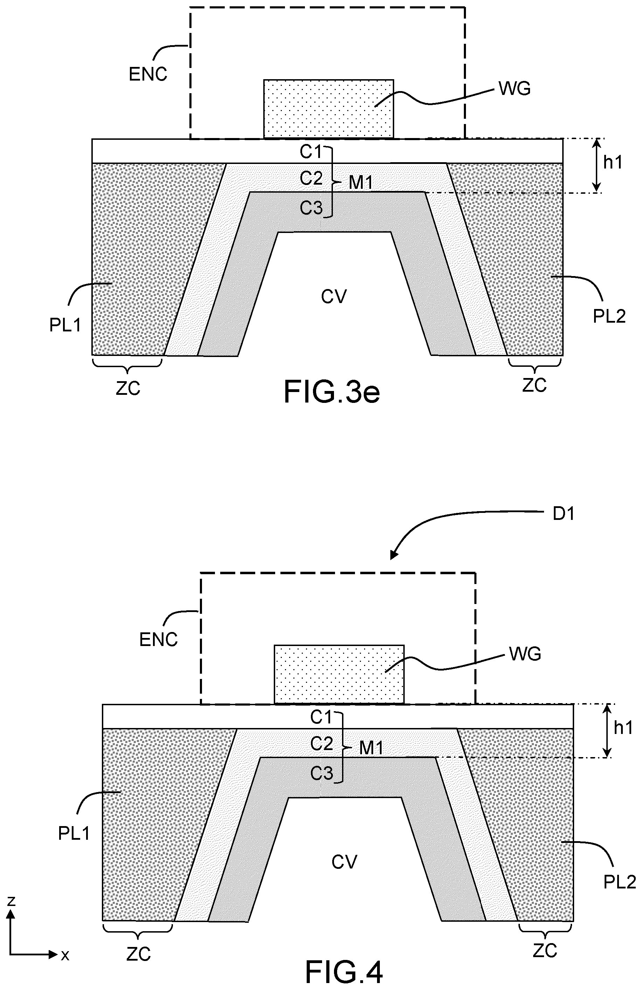

La figure 2 illustre l'organigramme du procédé P1 de fabrication d'un dispositif photonique D1 selon l'invention. Les figures 3a à 3e illustrent les étapes du procédé P1 selon l'invention.

La première étape (i) consiste à fournir une structure de guidage optique WG disposée sur une première couche C1 en SiO₂ thermique. La structure intermédiaire obtenue à l'issue de la première étape (i) est illustrée sur la figure 3a. La première couche C1 est disposée sur une première face supérieure d'un substrat SUB en un matériau semi-conducteur, plus particulièrement en silicium. La structure de guidage optique WG s'étend selon une direction Y orthogonale à la direction d'empilement Z. La structure de guidage optique WG est destinée à confiner une onde électromagnétique propagée selon sa direction d'extension Y. La première couche C1 est obtenue par oxydation thermique du substrat en silicium. La première couche C1 présente une épaisseur comprise entre 2µm et 3µm. Le substrat SUB présente une épaisseur supérieure à 100µm. La structure de guidage est un ruban en un matériau diélectrique ou semi-conducteur ayant un indice optique supérieur d'au moins 20% à l'indice optique du SiO₂, par exemple en silicium ou nitrure de silicium SiN. Avantageusement, l'empilement fourni lors de l'étape (i) comprend en outre une couche d'encapsulation ENC en SiO₂ dans laquelle au moins une partie de la structure de guidage est enterrée. La couche d'encapsulation ENC permet de protéger la structure de guidage WG lors de son renversement dans des étapes ultérieures du procédé de fabrication P1.

La première étape (i) peut se limiter à fournir la structure décrite sur la figure 3a préalablement fabriquée. Alternativement, la première étape (i) comprend un sous-procédé de fabrication de la structure de guidage optique WG sur la première couche C1 en SiO₂ thermique. Le sous-procédé de fabrication de la structure de guidage optique WG dépend de l'utilisation d'un substrat SUB en silicium massif ou d'un substrat SUB de type SOI (Acronyme de Silicon on Insulator).

Selon une première variante, le sous-procédé de fabrication de la structure de guidage comprend les sous-étapes suivantes : fournir le substrat SUB massif en silicium massif ensuite former la première couche C1 en SiO₂ thermique sur le substrat par oxydation thermique ; ensuite déposer une couche intermédiaire en un matériau diélectrique ou semi-conducteur, par exemple le SiN, sur la première couche C1 et enfin graver la couche intermédiaire pour obtenir le ruban formant la structure de guidage optique WG.

A titre d'exemple, le dépôt de la couche intermédiaire en SiN est réalisé par dépôt Chimique en Phase Vapeur sous Basse Pression LPCVD (pour Low-Pressure Chemical Vapor Deposition).

Selon une seconde variante, le sous-procédé de fabrication de la structure de guidage comprend les sous-étapes suivantes : fournir un substrat SOI comprenant un film de silicium positionné sur une couche en SiO2 thermique enterrée et positionnée sur un substrat SUB en silicium massif ; ensuite graver le film de silicium de manière à obtenir le ruban formant la structure de guidage optique WG et à découvrir la couche enterrée en SiO2 thermique autour de la structure de guidage optique WG.

De manière optionnelle, le procédé P1 comprend une étape d'encapsulation de la structure de guidage optique WG par le dépôt d'une couche d'encapsulation ENC en diélectrique, par exemple en SiO₂. A titre d'exemple, le dépôt de la couche d'encapsulation ENC est réalisé par dépôt chimique en phase vapeur assisté par plasma haute densité HDPCVD (pour High-Density Plasma Chemical Vapor Deposition) ou par dépôt en couches atomiques ALD (pour Atomic Layer Deposition) ou par dépôt par laser pulsé PLD (pour Pulsed Laser Deposition ) ou par dépôt chimique en phase vapeur à basse pression LPCVD (pour Low-Pressure Chemical Vapor Deposition ). L'ensemble de ces techniques présente un bon compromis entre d'une part la qualité du matériau obtenu et d'autre part la simplicité d'intégration et de mise en place dans le cadre d'un procédé de fabrication microtechnique. On obtient ainsi une protection physique de la structure de guidage sans dégrader les performances optiques du dispositif.

La deuxième étape (ii) consiste à graver la deuxième face inférieure du substrat SUB opposée à la première face. La structure intermédiaire obtenue à l'issue de la deuxième étape (ii) est illustrée sur la figure 3b. La structure fournie lors de l'étape (i) est renversée pour réaliser une gravure arrière (back etching en anglais). La seconde face opposée à la première face du substrat est gravée en dessous d'au moins une partie de la structure de guidage optique WG jusqu'à la première couche C1 en SiO2 thermique. La gravure arrière permet la formation d'une membrane formée par une partie de la première couche C1 suspendue au-dessus d'une cavité CV délimitée par deux piliers PL1, PL2. La structure de guidage optique WG est disposée sur cette membrane M1. La membrane M1 à l'état actuel présente une épaisseur comprise entre 2µm et 3µm. La membrane est en SiO₂ thermique avec une densité maximisée, une absence des liaisons hydrogène libres et une interface régulière (sans défaut de rugosité). Le volume de matériau semi-conducteur du substrat SUB préalablement situé en dessous de la structure de guidage est éliminé. La cavité CV présente une largeur l1 supérieure à la largeur de la structure de guidage WG. La largeur l1 de la cavité CV est comprise entre 10µm et 200µm. La gravure arrière est réalisée par une technique de gravure sèche et/ou humide. L'élimination partielle du substrat en dessous de la structure de guidage WG permet d'éliminer les pertes optiques résultants du chevauchement entre la lumière est le substrat en semi-conducteur.

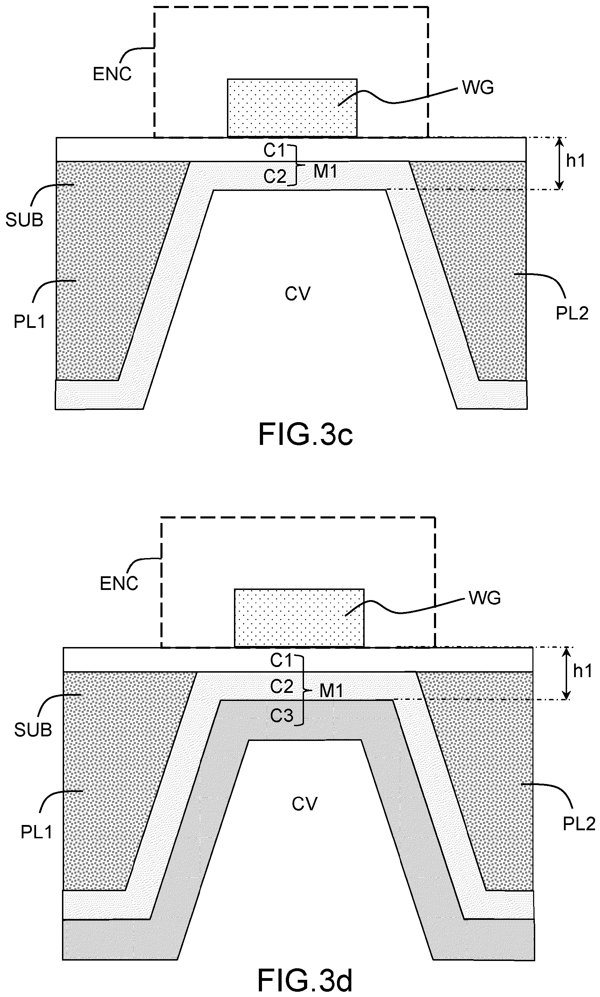

La troisième étape (iii) consiste à déposer une deuxième couche C2 en SiO₂ sur la première couche C1 du côté de la cavité CV de manière à augmenter l'épaisseur de la membrane M1. La structure intermédiaire obtenue à l'issue de la troisième étape (iii) est illustrée sur la figure 3c. Le dépôt de la deuxième couche est réalisé par dépôt chimique en phase vapeur assisté par plasma haute densité HDPCVD (pour High-Density Plasma Chemical Vapor Deposition) ou par dépôt en couches atomiques ALD (pour Atomic Layer Deposition) ou par dépôt par laser pulsé PLD (pour Pulsed Laser Deposition ) ou par dépôt chimique en phase vapeur à basse pression LPCVD (pour Low-Pressure Chemical Vapor Deposition ). La deuxième couche C2 présente une qualité inférieure à la première couche en SiO₂ thermique mais suffisante pour obtenir une meilleure performance optique avec réduction des pertes par rapport aux solutions connues. D'un autre côté, la mise en œuvre de cette étape est plus simple et moins énergivore qu'une oxydation thermique. Les techniques listées ci-dessus permettent d'obtenir un compromis entre d'une part la qualité du matériau obtenu et d'autre part la simplicité d'intégration et de mise en place dans le cadre d'un procédé de fabrication microtechnique. L'ajout de la deuxième couche C2 inférieure permet d'augmenter l'épaisseur h1 de la membrane M1 à des valeurs supérieures à 3µm sans faire recours à des recuits thermiques. L'augmentation de l'épaisseur de la membrane M1 permet en même temps d'éliminer les pertes optiques par chevauchement et de renforcer mécaniquement le dispositif photonique fabriqué. De plus, la membrane M1 permet de garder une interface de contact entre la structure de guidage WG et la première couche C1 en SiO₂ thermique. On rappelle que le SiO₂ thermique présente une meilleure densité et une absence de liaisons hydrogène libres et donc une minimisation des pertes par absorption de la lumière propagée.

La quatrième étape (iv) consiste à déposer une troisième couche C3 en SiO₂ sur la deuxième couche C2 du côté de la cavité CV. La structure intermédiaire obtenue à l'issue de la quatrième étape (iv) est illustrée sur la figure 3d. L'étape (iv) est réalisée par dépôt chimique en phase vapeur assisté par plasma (PECVD) ou par pulvérisation cathodique ou par dépôt par filage de liquide. La troisième couche C3 permet de renforcer mécaniquement la structure et plus particulièrement la membrane. Les techniques de dépôts utilisées permettent d'obtenir une couche de renforcement C3 de manière rapide et peu couteuse. La qualité optique du SiO₂ de la troisième couche C3 est inférieure à celle de la première couche C1 ou la deuxième couche C2 mais cela ne dégrade pas le confinement de la lumière propagée. En effet, la troisième couche C3 est suffisamment éloignée de la structure de guidage WG. La distance séparant la troisième couche C3 de la structure de guidage WG est supérieure à 3µm.

Avantageusement, et de manière optionnelle, le procédé P1 comprend une étape (v) de polissage des deux piliers PL1, PL2 du côté de la cavité CV. Cela permet d'enlever le SiO₂ déposé sur la surface inférieure des piliers PL1, PL2 découvrir au moins une partie du substrat SUB en un matériau semi-conducteur. Cela permet de créer des zones de contacts électrostatiques ZC entre le substrat SUB et les machines de fabrication. Les zones de contacts électrostatiques permettent d'éviter l'accumulation des charges électriques au niveau de l'interface entre le substrat SUB et les machines de fabrication lors des différentes étapes du procédé de fabrication de la puce. La structure intermédiaire obtenue à l'issue de l'étape de polissage est illustrée sur la figure 3d.

Avantageusement, et de manière optionnelle, le procédé P1 comprend une étape de remplissage de la cavité par CV un liquide adhésif ayant un indice optique compris dans l'intervalle [nₒₚₜ -10%, nₒₚₜ+10%], nₒₚₜ étant l'indice de réfraction de la membrane M1. Cela permet d'améliorer le confinement de la lumière propagée dans la structure de guidage WG.

La figure 4 illustre le dispositif photonique D1 selon l'invention. Le dispositif photonique D1 comprend une structure de guidage optique WG placée sur une membrane M1 suspendue entre deux piliers PL1, PL2. Cette membrane M1 est formée par un empilement de couches, comprenant une première couche C1 en SiO2 thermique et au moins une deuxième couche C2 en SiO2 non-thermique ou déposé. La première couche C1 est confinée entre la structure de guidage optique WG et la deuxième couche C2. La membrane M1 présente une épaisseur supérieure à 3µm. Cette structure suspendue permet d'éliminer les pertes optiques par chevauchement avec le substrat et une robustesse mécanique améliorée. La première couche C1 en SIO₂ thermique permet d'obtenir une interface régulière et dense avec la structure de guidage et ainsi améliorer les performances optiques du système. La première couche C1 en SIO₂ thermique ne présente pas des liaisons hydrogène libres ce qui permet de limiter les pertes par absorption de la lumière propagée par la membrane M1. De manière optionnelle, la membrane M1 comprend une troisième couche C3 en SIO₂ non-thermique pour renforcer mécaniquement la structure flottante. De manière optionnelle, la structure de guidage WG est encapsulée dans une couche d'encapsulation en diélectrique pour la protéger mécaniquement.

Le dispositif photonique D1 peut être un coupleur directionnel ou un modulateur radiofréquence ou une source à anneaux. Un coupleur directionnel en photonique est un dispositif optique qui permet de diviser ou de combiner la lumière provenant de différentes voies optiques de manière contrôlée. Un modulateur RF photonique (Radio Frequency) est un dispositif optoélectronique utilisé pour moduler un signal optique en réponse à un signal électrique à haute fréquence (RF). Il permet de contrôler différentes caractéristiques de la lumière, telles que son amplitude, sa fréquence ou sa phase. Une source à anneaux en photonique est un dispositif optique qui utilise une structure en forme d'anneau pour générer des photons. La lumière injectée dans l'anneau subit des réflexions internes multiples, ce qui peut augmenter l'efficacité de la génération de photons dans certaines longueurs d'onde. Ces sources sont utilisées dans diverses applications de la photonique pour leur capacité à produire une lumière de haute qualité et à contrôler précisément la longueur d'onde émise.

## Revendications

1. Procédé (P1) de fabrication d'un dispositif photonique (D1) comprenant les étapes suivantes :
(i) fournir une structure de guidage optique (WG) disposée sur une première couche en SiO₂ thermique ; la première couche (C1) étant disposée sur une première face d'un substrat (SUB) en un matériau semi-conducteur ;
(ii) graver la seconde face opposée à la première face du substrat (Sub) en dessous d'au moins une partie de structure de guidage optique (WG) jusqu'à la première couche (C1) en SiO₂ thermique de manière à obtenir une membrane (M1) formée par une partie de la première couche suspendue au-dessus d'une cavité (CV) délimitée par deux piliers (PL1, PL2) ; la structure de guidage optique (WG) étant disposée sur ladite membrane (M1) ;
(iii) déposer une deuxième couche (C2) en SiO₂ non-thermique sur la première couche (C1) du côté de la cavité (CV) de manière à augmenter l'épaisseur de la membrane (M1) ;

2. Procédé (P1) de fabrication d'un dispositif photonique (D1) selon la revendication 1 dans lequel l'étape (iii) de dépôt de la deuxième couche (C2) est réalisée par dépôt chimique en phase vapeur assisté par plasma haute densité (HDPCVD) ou par dépôt en couches atomiques (ALD) ou par dépôt par laser pulsé (PLD) ou par dépôt chimique en phase vapeur à basse pression (LPCVD).

3. Procédé (P1) de fabrication d'un dispositif photonique (D1) selon l'une quelconque des revendications 1 ou 2 dans lequel l'étape (i) comprend un sous-procédé de fabrication de la structure de guidage optique (WG) sur la première couche (C1) en SiO₂ thermique.

4. Procédé (P1) de fabrication d'un dispositif photonique (D1) selon la revendication 3 dans lequel le sous-procédé de fabrication de la structure de guidage optique (WG) comprend les sous-étapes suivantes :
- fournir un substrat (SOI) comprenant un film en silicium positionné sur une couche en SiO₂ thermique enterrée et positionnée sur un support en silicium massif ;
- graver le substrat de manière à réaliser un ruban formant une structure de guidage optique à partir du film en silicium sur la couche en SiO₂ thermique enterrée.

5. Procédé (P1) de fabrication d'un dispositif photonique (D1) selon la revendication 3 dans lequel le sous-procédé de fabrication de la structure de guidage optique (WG) comprend les sous-étapes suivantes :
- fournir le substrat (SUB) massif en un matériau semi-conducteur.
- déposer la première couche (C1) en SiO₂ thermique sur le substrat par oxydation thermique ;
- déposer une couche intermédiaire en un matériau diélectrique sur la première couche (C1) ;
- graver la couche intermédiaire pour structurer la structure de guidage optique (WG).

6. Procédé (P1) de fabrication d'un dispositif photonique (D1) selon l'une quelconque des revendications 1 à 5 comprenant en outre l'étape suivante :
(iv) déposer une troisième couche (C3) en SiO₂ sur la deuxième couche (C2) du côté de la cavité (CV) ; l'étape (iv) étant réalisée par dépôt chimique en phase vapeur assisté par plasma (PECVD) ou par pulvérisation cathodique ou par dépôt par filage de liquide.

7. Procédé (P1) de fabrication d'un dispositif photonique (D1) selon l'une quelconque des revendications 1 à 6 comprenant en outre l'étape suivante :
(v) polir les deux piliers (PL1, PL2) du côté de la cavité (CV) de manière à découvrir au moins une partie du substrat (SUB) en un matériau semi-conducteur.

8. Procédé (P1) de fabrication d'un dispositif photonique (D1) selon l'une quelconque des revendications 1 à 7 comprenant en outre l'étape suivante :
encapsuler au moins une partie de la structure de guidage (WG) dans une couche d'encapsulation en diélectrique (ENC).

9. Procédé (P1) de fabrication d'un dispositif photonique (D1) selon l'une quelconque des revendications 1 à 8 comprenant en outre l'étape suivante :
Remplir la cavité (CV) par un liquide adhésif ayant un indice optique compris dans l'intervalle [nₒₚₜ -10%, nₒₚₜ+10%], nₒₚₜ étant l'indice de réfraction de la membrane (M1).

10. Dispositif photonique (D1) comprenant une structure de guidage optique (WG) disposée sur une membrane (M1) suspendue entre deux piliers (PL1, PL2) ; ladite membrane (M1) étant formée par un empilement de couches comprenant une première couche (C1) en SiO₂ thermique et au moins une deuxième couche (C2) en SiO₂ non-thermique ; la première couche (C1) étant confinée entre la structure de guidage optique (WG) et la deuxième couche (C2).

11. Dispositif photonique (D1) selon la revendication 10 dans lequel la membrane présente une épaisseur supérieure à 3 µm.

12. Dispositif photonique (D1) selon l'une quelconque des revendications 10 ou 11 dans lequel la première couche (C1) étant dépourvue de liaisons hydrogène libres.

13. Dispositif photonique (D1) selon l'une quelconque des revendications 10 à 12 dans lequel la première couche (C1) présente une densité supérieure à celle de la deuxième couche (C2).
